# EUROPEAN PATENT SPECIFICATION

(11) **EP 3 115 655 B1**
(45) Date of publication and mention of the grant of the patent: **18.04.2018**
(21) Application number: 16178122.4
(22) Date of filing: 06.07.2016
(51) Int. Cl.: F16J 15/08, F16L 15/00

(54) **INTEGRATED METAL C-SEAL WITH THREADED ADAPTER**
INTEGRIERTE METALL-C-DICHTUNG MIT GEWINDEADAPTER
JOINT C MÉTALLIQUE INTÉGRÉ AVEC ADAPTATEUR FILETÉ

(30) Priority: 07.07.2015 US 201514793540
(43) Date of publication of application: 11.01.2017
(73) Proprietor: United Technologies Corporation, Farmington, CT 06032 (US)
(72) Inventor: CERINO, Joseph N., Middletown, CT Connecticut 06457 (US); HALL, Christopher, Vernon, CT Connecticut 06066 (US); BLUME, Karl D., Hebron, CT Connecticut 06248 (US); SCHUBAUER, James, Colchester, CT Connecticut 06415 (US); LINK, Kurt, West Hartford, CT Connecticut 06110 (US)
(74) Representative: Leckey, David Herbert

(56) References cited:
- DE-A1- 3 545 883
- US-A- 3 273 918
- US-A- 3 971 566
- US-A- 4 927 187
- US-B1- 6 231 086

## Description

### FIELD OF INVENTION

The present disclosure relates to oil systems, and, more specifically, to a sealing adapter for an oil system.

### BACKGROUND

Fluids or gasses may pass into and out of pressurized vessels in mechanical systems such as oil systems in a vehicle. Joints may connect components of the system and may be subject to leakage unless sealed. A variety of joint and seal types may be used, each having strengths and weaknesses. Metal C-seals may have been incorporated in flanges using multiple bolts to crush the C-seal. The bolts may result in uneven crimping of the seal depending on the order in which bolts are tightened down. Threaded connections may use an elastomeric O-ring seal. However, the elastomeric seal may not be suitable for use in high-temperature environments.

A prior art adapter and seal system having the features of the preamble to claim 1 is disclosed in US 3,273,918. Other prior art adapter and seal systems are disclosed in US 3,971,566, US 4,927,187, US 6,231,086 and DE 35 45 883.

### SUMMARY

From one aspect, the present invention provides an adapter and seal system in accordance with claim 1.

In various embodiments, a wrenching feature may be disposed about an outer diameter of the protrusion. The C-seal may include an opening disposed on an inner diameter of the C-seal. A locking feature may be disposed on the protrusion. A second thread may be disposed about the outer diameter of the cylindrical body with the protrusion located between the first thread and the second thread. A cone seat may be disposed at an axial end of the cylindrical body. The adapter may also comprise an austenitic nickel-chromium-based alloy.

From another aspect, the present invention provides an oil system in accordance with claim 8.

From yet another aspect, the present invention provides a method of sealably coupling an adapter and an oil component in accordance with claim 9.

In various embodiments, the method may further include placing the C-seal in the groove with an opening disposed on the inner diameter of the C-seal. The step of compressing the C-seal may also comprise applying a compressive force uniformly about a circumference of the C-seal.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates a perspective view of a threaded adapter for use with a C-seal, in accordance with various embodiments;
FIG. 2 illustrates a cross section of a threaded adapter for use with a C-seal, in accordance with various embodiments;
FIG. 3A illustrates an annular C-seal with an opening on the inner diameter, in accordance with various embodiments;
FIG. 3B illustrates a cut away of an annular C-seal with an opening on the inner diameter, in accordance with various embodiments; and
FIG. 4 illustrates a cross section of a threaded adapter and C-seal installed in an oil system, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

In various embodiments, metallic C-seals may provide improved sealing when the seal is crimped and/or bent uniformly. The adapter described herein may apply compressive force distributed uniformly about the circumference of a C-seal and thus crimp or bend the C-seal in a uniform manner. The adapter may also direct the compressive force in a direction normal to a sealing surface to increase stability and uniformity during compression of the C-seal. Thus, the metallic adapter and C-seal system may provide sealing in high-temperature applications such as heated oil systems.

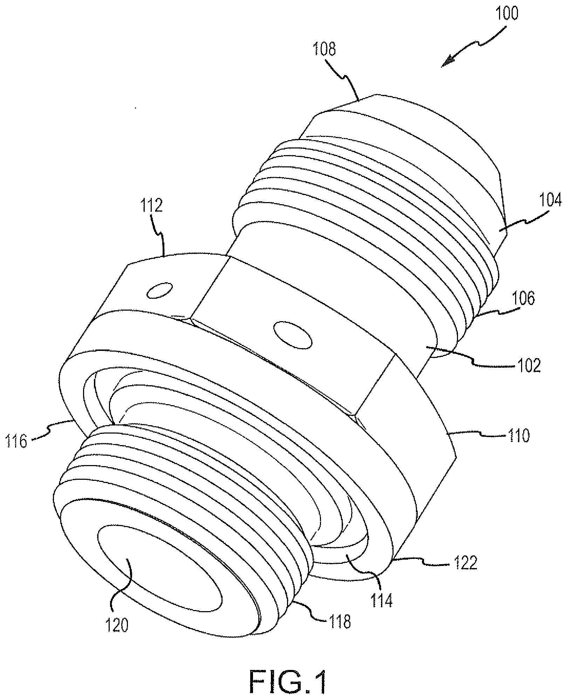

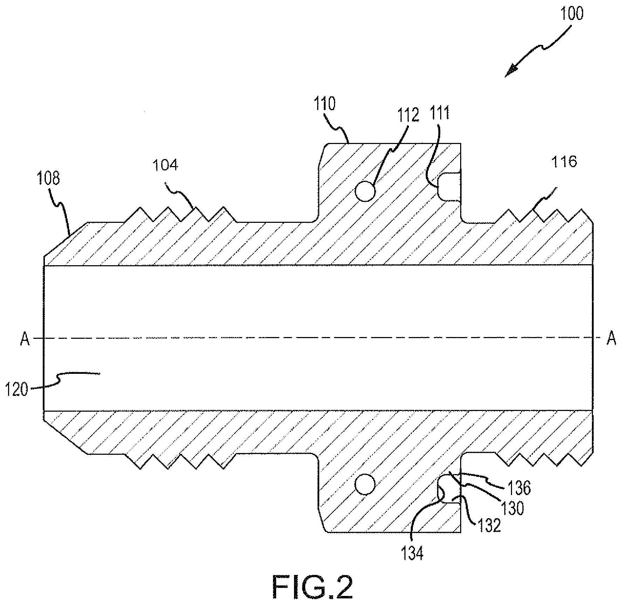

With reference to FIGs. 1 and 2, an adapter 100 for use with a C-seal is shown, in accordance with various embodiments. Adapter 100 may comprise a cylindrical body 102 having an axisymmetric or rotationally symmetric geometry centered about axis A. Cylindrical body 102 may have various portions with differing diameters. Male mating surface 104 of cylindrical body 102 may comprise thread 106 disposed about an outer diameter of cylindrical body 102. A cone seat 108 may be disposed at a radial end of cylindrical body 102. The cone seat may be oriented at an angle relative to cylindrical body ranging from 30 to 50 degrees. For example, cone seat may have an angle of 37 degrees relative to cylindrical body 102. Male mating surface 104 and cone seat 108 may provide an interface to connect adapter 100 to another system component.

In various embodiments, a wrenching feature 110 may protrude from cylindrical body 102 in a radial direction. Wrenching feature 110 may comprise a polygonal shape to engage a wrench during installation, maintenance, or removal. The configuration and size of wrenching feature 110 may vary. For example, the wrenching feature may be configured in 6-point hexagonal configuration or 12-point configuration. A locking feature may be located on adapter 100. For example, safety cable holes 112 may be defined in a protrusion of wrenching feature 110 from cylindrical body 102.

In various embodiments, male mating surface 116 may be disposed at an opposite end of adapter 100 from cone seat 108 in an axial direction. Male mating surface 116 of cylindrical body 102 may include threads 118 disposed about an outer diameter of cylindrical body 102. A cylindrical passage 120 may be defined by an inner diameter of cylindrical body 102.

In various embodiments, surface 122 may partially define wrenching feature 110 protruding from cylindrical body 102. Surface 122 may be a flat surface oriented coplanar with a radial plane orthogonal to axis A. Surface 122 may define an opening 136 of groove 114 with opening 136 being coplanar with surface 122. Opening 136 of groove 114 may face in an axial direction towards thread 118. Groove 114 may have a distal wall 132 and proximal wall 130. Distal wall 132 and proximal wall 130 may be axisymmetric about axis A and parallel to one another when viewed in cross section as illustrated in FIG. 2. Groove 114 may also have a bottom surface 134 spanning between distal wall 132 and proximal wall 130 to define groove 114. Groove 114 may have a substantially uniform depth about the circumference of groove 114.

In various embodiments, adapter 100 may be made from metals or metal alloys including steel, titanium, nickel, aluminum, or other suitably rigid materials. For example, adapter 100 may be made from an austenitic nickel-chromium-based alloy such as that sold under the trademark Inconel®, which is available from Special Metals Corporation of New Hartford, New York, USA. Groove 114 of adapter 100 may be made by turning using a lathe to achieve the parallelism and flatness of the various features of adapter 100 described herein.

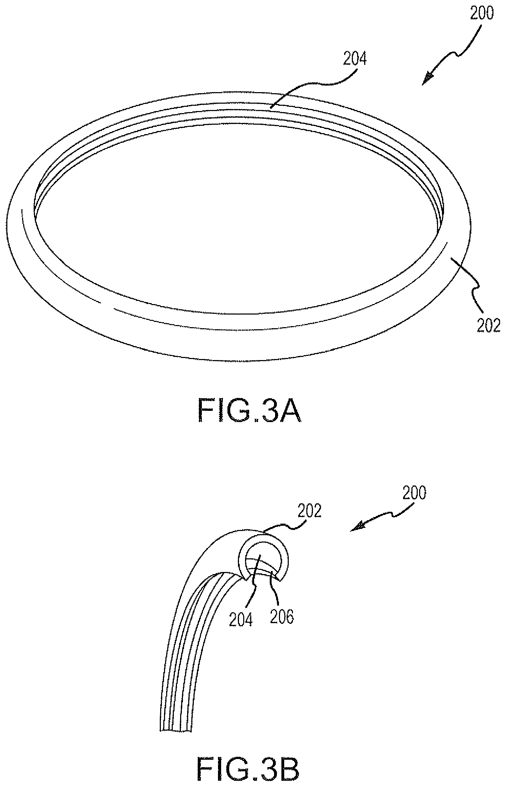

With reference to FIGs. 3A and 3B, a C-seal 200 is shown, in accordance with various embodiments. C-seal 200 comprises an annular shape with a convex outer surface 202 and a concave inner surface 206. C-seal 200 also comprises a C-shaped cross section with an opening into cavity 204 located on an inner diameter or an outer diameter of C-seal 200. Cavity 204 may be defined by concave inner surface 206 of C-seal 200. With brief reference to FIG. 2, C-seal 200 may be configured to fit into groove 114 to provide sealing against adapter 100. C-seal 200 may protrude slightly from groove 114 in response to resting in groove 114 against bottom surface 134 absent a compressive force.

In various embodiments, C-seal 200 may be made from metals or metal alloys including steel, titanium, nickel, aluminum, silver, or other suitably rigid materials. For example, C-seal 200 may be made from an austenitic nickel-chromium-based alloy such as that sold under the trademark Inconel®, which is available from Special Metals Corporation of New Hartford, New York, USA. The material selected for C-seal 200 may be chosen to provide favorable corrosion characteristics when located in groove 114 of adapter 100 during service.

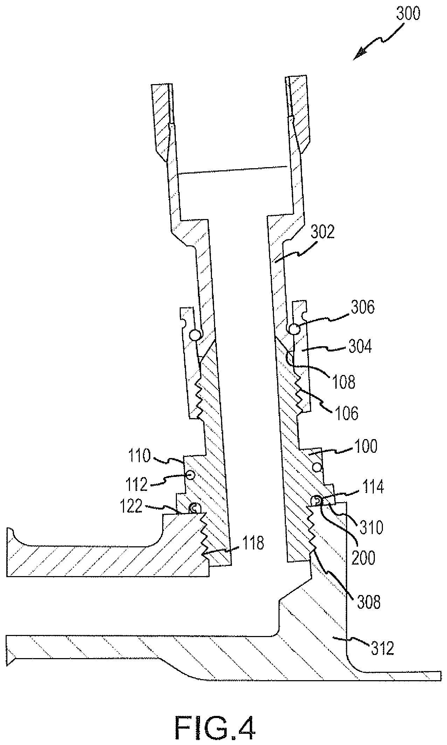

With reference to FIG. 4, seal system 300 is shown with adapter 100 and C-seal 200 installed in oil system, in accordance with various embodiments. Component 302 may be a tubular component or conduit configured to transport a fluid or gas. Component 302 may receive cone seat 108 with a female threaded member 304 disposed around the joint between component 302 and adapter 100. Female threaded member 304 may have a threaded inner diameter to threadedly engage thread 106 of adapter 100. Female threaded member 304 may also retain a seal 306 between an inner diameter of female threaded member 304 and an outer diameter of component 302. Adapter 100 may sealably connect to component 302 to limit leakage of pressurized fluid or gas along the joint between adapter 100 and component 302.

In various embodiments, adapter 100 may also sealably connect with component 312. Component 312 may also be a tubular component or conduit configured to transport a fluid or gas. Thread 118 of adapter 100 may engage female mating surface 308 of component 312. Thread 118 may also urge surface 122 of adapter 100 against surface 310 of component 312 in response to rotation about the axis caused by, for example, rotation of wrenching feature 110, such as rotation of wrenching feature 110 in response to rotation by a wrench or other tool. Surface 310 and surface 122 may lie flat against one another. C-seal 200 may be disposed within groove 314 and thus located between adapter 100 and surface 310 of component 312. As adapter 100 is threaded into component 312, surface 310 may contact C-seal 200 and provide a compressive force as surface 310 and surface 122 come together.

In various embodiments and with reference to FIGs. 2 and 4, adapter 100 may be configured to distribute a crushing load to the C-seal in an axial direction as thread 118 urges surface 122 in the direction of surface 310 in response to rotation of adapter 100. The flat contour of surface 310 that is also normal to the relative motion between adapter 100 and component 312 may direct the crushing load and/or compressive force in a normal direction (i.e., an axial direction relative to axis A as adapter 100 is rotating). The adapter may also distribute crushing load evenly about the circumference of the C-seal as thread 118 urges surface 122 in the direction of surface 310 in response to rotation of adapter 100. The compressive force exerted on C-seal 200 as surface 122 and surface 310 are pressed together may crimp and bend C-seal 200 in a substantially uniform manner to provide sealing between component 312 and adapter 100 in high-temperature applications.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. An adapter (100) and seal system (300), comprising:
a cylindrical body (102) centered about an axis (A);
a first thread (118) disposed about an outer diameter of the cylindrical body (102);
a protrusion on the cylindrical body (102) extending radially outward from the cylindrical body (102), the protrusion partially defined by a surface orthogonal to the axis (A);
a circular trench (114) formed in the surface, the circular trench (114) opening in an axial direction towards the first thread (118); and **characterised by**
a C-seal (200) disposed in the circular trench (114), wherein the C-seal comprises an annular shape with a C-shaped cross section , a convex outer surface (202) and a concave inner surface (206).

2. The adapter and seal system of claim 1, further comprising a wrenching feature (110) disposed about an outer diameter of the protrusion.

3. The adapter and seal system of claim 1 or 2, wherein the C-seal (200) comprises an opening (204) disposed on an inner diameter of the C-seal (200).

4. The adapter and seal system of claim 1, 2 or 3, further comprising a locking feature disposed on the protrusion.

5. The adapter and seal system of any preceding claim, further comprising a second thread (106) disposed about the outer diameter of the cylindrical body (102) with the protrusion located between the first thread (118) and the second thread (106).

6. The adapter and seal system of any preceding claim, further comprising a cone seat (108) disposed at an axial end of the cylindrical body (102).

7. The adapter and seal system of any preceding claim, wherein the adapter (100) comprises an austenitic nickel-chromium-based alloy.

8. An oil system, comprising:
a first oil component (312); and
the adapter (100) and seal system (300) of any preceding claim, wherein the adapter (100) is sealably coupled to the first oil component (312), and the C-seal (200) is metallic and compressed between the adapter (100) and the first oil component (312).

9. A method of sealably coupling an adapter (100) and an oil component (302, 312), comprising:
rotating the adapter (100) about an axis (A) to threadedly engage the adapter (100) and a threaded female member (304) of the oil component (302, 312); and
compressing a C-seal (200) disposed in a groove (114) of the adapter (100) in response to threadedly engaging the adapter (100), wherein the groove (114) is formed in a surface of the adapter (100) oriented in a plane orthogonal to the axis (A), and wherein the C-seal comprises an annular shape with a C-shaped cross section, a convex outer surface (202) and a concave inner surface (206).

10. The method of claim 9, further comprising placing the C-seal (200) in the groove (114) with an opening (204) disposed on an inner diameter of the C-seal (200).

11. The method of claim 9 or 10, wherein the compressing the C-seal (200) further comprises applying a compressive force uniformly about a circumference of the C-seal (200).

## Patentansprüche

1. Adapter (100) und Dichtungssystem (300), umfassend:
einen zylindrischen Körper (102), der um eine Achse (A) zentriert ist;
ein erstes Gewinde (118), das um einen Außendurchmesser des zylindrischen Körpers (102) angeordnet ist;
einen Vorsprung am zylindrischen Körper (102), der sich vom zylindrischen Körper (102) radial auswärts erstreckt, wobei der Vorsprung teilweise durch eine zur Achse (A) rechtwinklige Oberfläche definiert ist;
eine in der Oberfläche gebildete kreisförmige Rinne (114), wobei sich die kreisförmige Rinne (114) in einer axialen Richtung dem ersten Gewinde (118) zugewandt öffnet; und
**gekennzeichnet durch**
eine in der kreisförmigen Rinne (114) angeordnete C-Dichtung (200), wobei die C-Dichtung eine ringförmige Form mit einem C-förmigen Querschnitt, eine konvexe Außenfläche (202) und eine konkave Innenfläche (206) aufweist.

2. Adapter und Dichtungssystem nach Anspruch 1, ferner ein Schraubelement (110) umfassend, das um einen Außendurchmesser des Vorsprungs angeordnet ist.

3. Adapter und Dichtungssystem nach Anspruch 1 oder 2, wobei die C-Dichtung (200) eine Öffnung (204) umfasst, die an einem Innendurchmesser der C-Dichtung (200) angeordnet ist.

4. Adapter und Dichtungssystem nach Anspruch 1, 2 oder 3, ferner ein Blockierelement umfassend, das am Vorsprung angeordnet ist.

5. Adapter und Dichtungssystem nach einem beliebigen der vorstehenden Ansprüche, ferner ein zweites Gewinde (106) umfassend, das um den Außendurchmesser des zylindrischen Körpers (102) angeordnet ist, wobei der Vorsprung zwischen dem ersten Gewinde (118) und dem zweiten Gewinde (106) platziert ist.

6. Adapter und Dichtungssystem nach einem beliebigen der vorstehenden Ansprüche, ferner eine konusförmige Aufnahme (108) umfassend, die an einem axialen Ende des zylindrischen Körpers (102) angeordnet ist.

7. Adapter und Dichtungssystem nach einem beliebigen der vorstehenden Ansprüche, wobei der Adapter (100) eine austenitische Nickel-Chrom-basierte Legierung umfasst.

8. Ölschmiersystem, umfassend:
eine erste Ölkomponente (312); und
den Adapter (100) und das Dichtungssystem (300) nach einem beliebigen der vorstehenden Ansprüche, wobei der Adapter (100) abdichtbar mit der ersten Ölkomponente (312) gekoppelt ist, und die C-Dichtung (200) metallisch ist und zwischen dem Adapter (100) und der ersten Ölkomponente (312) komprimiert ist.

9. Verfahren zum abdichtbaren Koppeln eines Adapters (100) und einer Ölkomponente (302, 312), umfassend:
Rotieren des Adapters (100) um eine Achse (A), um den Adapter (100) mit einem ein Gewinde aufweisenden aufnehmenden Element (304) der Ölkomponente (302, 312) zu verschrauben; und
Komprimieren einer in einer Rille (114) des Adapters (100) angeordneten C-Dichtung (200) als Reaktion auf das Verschrauben des Adapters (100), wobei die Rille (114) in einer Oberfläche des Adapters (100) gebildet ist, die in einer zur Achse (A) rechtwinkligen Ebene ausgerichtet ist, und wobei die C-Dichtung eine ringförmige Form mit einem C-förmigen Querschnitt, einer konvexen Außenfläche (202) und einer konkaven Innenfläche (206) aufweist.

10. Verfahren nach Anspruch 9, ferner das Platzieren der C-Dichtung (200) in der Rille (114) mit einer Öffnung (204), die an einem Innendurchmesser der C-Dichtung (200) angeordnet ist, umfassend.

11. Verfahren nach Anspruch 9 oder 10, wobei das Komprimieren der C-Dichtung (200) ferner umfasst, dass um einen Umfang der C-Dichtung (200) einheitlich eine Druckkraft ausgeübt wird.

## Revendications

1. Système d'adaptateur (100) et de joint (300), comprenant :
un corps cylindrique (102) centré autour d'un axe (A) ;
un premier filet (118) disposé autour d'un diamètre extérieur du corps cylindrique (102) ;
une saillie sur le corps cylindrique (102) s'étendant radialement vers l'extérieur depuis le corps cylindrique (102), la saillie étant partiellement définie par une surface orthogonale à l'axe (A) ;
une rigole circulaire (114) formée dans la surface, la rigole circulaire (114) s'ouvrant dans une direction axiale vers le premier filet (118) ; et **caractérisé par**
un joint C (200) disposé dans la rigole circulaire (114), dans lequel le joint C comprend une forme annulaire avec une section transversale en forme de C, une surface extérieure convexe (202) et une surface intérieure concave (206).

2. Système d'adaptateur et de joint selon la revendication 1, comprenant une outre un élément de torsion (110) disposé autour d'un diamètre extérieur de la saillie.

3. Système d'adaptateur et de joint selon la revendication 1 ou 2, dans lequel le joint C (200) comprend une ouverture (204) disposée sur un diamètre intérieur du joint C (200).

4. Système d'adaptateur et de joint selon la revendication 1, 2 ou 3, comprenant en outre un élément de verrouillage disposé sur la saillie.

5. Système d'adaptateur et de joint selon une quelconque revendication précédente, comprenant en outre un second filet (106) disposé autour du diamètre extérieur du corps cylindrique (102) avec la saillie située entre le premier filet (118) et le second filet (106).

6. Système d'adaptateur et de joint selon une quelconque revendication précédente, comprenant en outre un siège conique (108) disposé au niveau d'une extrémité axiale du corps cylindrique (102).

7. Système d'adaptateur et de joint selon une quelconque revendication précédente, dans lequel l'adaptateur (100) comprend un alliage à base de nickel-chrome austénitique.

8. Système d'huile comprenant :
un premier composant d'huile (312) ; et
le système d'adaptateur (100) et de joint (300) selon une quelconque revendication précédente, dans lequel l'adaptateur (100) est couplé par étanchéité au premier composant d'huile (312), et le joint C (200) est métallique et compressé entre l'adaptateur (100) et le premier composant d'huile (312).

9. Procédé de couplage par étanchéité d'un adaptateur (100) et d'un composant d'huile (302, 312), comprenant :
la rotation de l'adaptateur (100) autour d'un axe (A) pour engager par filetage l'adaptateur (100) et un élément femelle fileté (304) du composant d'huile (302, 312) ; et
la compression d'un joint C (200) disposé dans une rainure (114) de l'adaptateur (100) en réponse à l'engagement par filetage de l'adaptateur (100), dans lequel la rainure (114) est formée dans une surface de l'adaptateur (100) orienté dans un plan orthogonal à l'axe (A), et dans lequel le joint C comprend une forme annulaire avec une section transversale en C, une surface extérieure convexe (202) et une surface intérieure concave (206).

10. Procédé selon la revendication 9, comprenant en outre le placement du joint C (200) dans la rainure (114) avec une ouverture (204) disposée sur un diamètre intérieur du joint C (200) .

11. Procédé selon la revendication 9 ou 10, dans lequel la compression du joint C (200) comprend en outre l'application d'une force compressive uniformément autour d'une circonférence du joint C (200).
